(19) Europäisches Patentamt

European Patent Office

Office européen des brevets

(11) **EP 0 570 847 B1**

(12) **EUROPÄISCHE PATENTSCHRIFT**

(45) Veröffentlichungstag und Bekanntmachung des Hinweises auf die Patenterteilung:
**16.12.1998 Patentblatt 1998/51**

(51) Int. Cl.⁶: **B01J 20/20**, B01D 15/00, B01D 53/02

(21) Anmeldenummer: 93107797.8

(22) Anmeldetag: **13.05.1993**

(54) **Sorption von organischen Verbindungen aus Gasen**

Sorption of organic compounds from gases

Sorption de composés organiques dans des gaz

(84) Benannte Vertragsstaaten:
AT BE CH DE DK ES FR GB GR IE IT LI LU NL PT SE

(30) Priorität: **22.05.1992 DE 4216867**

(43) Veröffentlichungstag der Anmeldung:
**24.11.1993 Patentblatt 1993/47**

(73) Patentinhaber:
**Engelhard Process Chemicals GmbH**
**31582 Nienburg / Weser (DE)**

(72) Erfinder:
• **Bretz, Karl-Heinz**
**W-3070 Nienburg/Weser (DE)**
• **Fuhrmann, Kirsten**
**W-3050 Wunstorf 1 (DE)**
• **Hoffmeister, Michael**
**W-3000 Hannover 1 (DE)**
• **Engelmann, Peter**
**W-3008 Garbsen 1 (DE)**
• **Meyer-Anderson, Andreas**
**W-2800 Bremen 1 (DE)**
• **Schultz, Egon**
**W-3160 Lehrte (DE)**

• **Wischnat, Alf-Eric**
**W-3160 Lehrte (DE)**
• **Derleth, Helmut**
**W-3070 Nienburg/Weser (DE)**
• **Schwetje, Norbert**
**W-3000 Hannover 72 (DE)**

(74) Vertreter: **Bezold, Gunter, Dr.**
**Grünecker, Kinkeldey, Stockmair &**
**Schwanhäusser**
**Anwaltssozietät**
**Maximilianstrasse 58**
**80538 München (DE)**

(56) Entgegenhaltungen:
EP-A- 0 278 061     EP-A- 0 343 697
EP-A- 0 369 171     DE-C-  350 260
FR-A- 2 313 967     US-A- 3 803 033
US-A- 4 036 747     US-A- 4 795 735

• **DATABASE WPI Week 8951, Derwent Publications Ltd., London, GB; AN 89-373408 & JP-A-1 278 408 (MATSUSHITA)**
• **DATABASE WPI Week 9111, Derwent Publications Ltd., London, GB; AN 91-074215 & DD-A-283 279 (VEB CHEMIEFASERN)**

**Beschreibung**

Die Erfindung bezieht sich auf ein Verfahren zur Sorption von organischen Verbindungen aus Flüssigkeiten oder Gasen unter Verwendung eines Sorbens, umfassend Aktivkohle in einem oxidischen Träger, wobei der Träger in einem Fällöl geformt worden ist. Die Erfindung bezieht sich weiterhin auf ein neues Sorbens, das im Verfahren verwendet werden kann.

Es ist bereits bekannt, organische Verbindungen aus Gasen mittels Aktivkohle zu sorbieren. Nachteil ist, daß die Aktivkohle in fein verteilter Form schwierig zu handhaben ist und auch das zu reinigende Gas verunreinigen kann. Weiterhin ist die Regeneration energieaufwendig, da sie - wegen der Brandgefahr - üblicherweise mit Heißdampf durchgeführt wird.

EP-A-343 697 beschreibt ein Verbundsorbens, das aus einem Formkörper aus einer homogenen Mischung besteht, welche Aktivkohle und wasserhaltiges Aluminiumoxid vom Pseudoböhmit-Typ umfaßt.

EP-A-369 171 beschreibt ein Verfahren zum Herstellen eines Verbundwerkstoffs aus Aktivkohle und Aluminiumoxid, welches das Bereitstellen eines Gemisches enthaltend Aluminiumoxidhydrat-Pulver und Aktivkohle, das Zugeben eines Peptisiermittels zu dem Gemisch, das Bilden eines Formrohlings aus dem Gemisch und das Erhitzen des Formrohlings umfaßt.

Aufgabe der Erfindung ist es, ein Verfahren zur Sorption von organischen Verbindungen aus Gasen anzugeben, welches selektiv wirkt und die Nachteile des Standes der Technik nicht aufweist. Diese Aufgabe wird durch das erfindungsgemäße Verfahren gelöst.

Das erfindungsgemäße Verfahren zur Sorption von organischen Verbindungen aus Flüssigkeiten oder Gasen unter Verwendung von Aktivkohle ist dadurch gekennzeichnet, daß man ein Sorbens verwendet, umfassend 5 bis 40 Gew.-% partikelförmige Aktivkohle einer Partikelgröße von 50 bis 10.000 nm in einem oxidischen Träger auf Basis von amorphem $SiO_2$, $Al_2O_3$ oder Alumosilikat, wobei der Träger in einem Fällöl geformt worden ist.

Der Begriff "Aktivkohle" umfaßt im Rahmen der vorliegenden Erfindung auch Aktivkohle-Ruß, Aktivkohle-Koks und Graphit, nicht jedoch Aktivkohle-Molekularsieb.

Die Partikelgröße der Aktivkohle liegt im Bereich von 50 bis 10.000 nm.

Der Gehalt an Aktivkohle im Sorbens liegt bezogen auf das Gesamtgewicht des Sorbens zwischen 5 und 40 Gew.-%.

Eine gleichförmige homogene Verteilung der Aktivkohle ist besonders vorteilhaft. Man kann aber auch mit Aktivkohle beschichtete Sorbenzien verwenden.

Als oxidischer Träger wird amorphes Material verwendet. Sehr gut geeignet sind amorphe oxidische Träger, die kristallines Material enthalten können. Besonders gut geeignet zur Anwendung im erfindungsgemäßen Verfahren sind amorphe oxidische Träger auf Basis von $SiO_2$ oder Alumosilikat, insbesondere $SiO_2$.

Sofern kristalline Anteile, z.B. Zeolithe oder Aluminiumphosphat enthalten sind, liegt deren Anteil vorteilhaft im Bereich von 0,5 bis 50 Gew.-%, bezogen auf das Gesamtgewicht des Sorbens. Die Porenweite des amorphen oxidischen Materials liegt vorteilhaft im Bereich von 1 bis 10.000 nm.

Das Sorbens kann in beliebiger Form, z.B. als Granulat, Strangpreßling, Monolith vorliegen. Es liegt zweckmäßig in Partikeln einer Größe von mindestens 0,1 mm vor. Besonders bevorzugt ist ein Sorbens, das perlförmig ist. Der Durchmesser dieser perlförmigen Partikel liegt zweckmäßig im Bereich von 0,5 bis 10 mm, vorzugsweise 1 bis 6 mm. Sorbenzien, die anders geformt sind, können aber ebenfalls verwendet werden.

Die Temperatur, bei der das erfindungsgemäße Verfahren durchgeführt wird, liegt zwischen -70 °C und der Desorptionstemperatur, vorteilhafterweise im Bereich zwischen 10 und 40 °C.

Man kann bei Normaldruck (Umgebungsdruck) arbeiten, aber auch bei Unterdruck, z.B. bis herab zu 0,1 mbar, oder bei Überdruck bis hin zu 50 bar.

Das beladene Sorptionsmittel kann durch Erwärmen wieder regeneriert werden. Eine bevorzugte Ausführungsform des erfindungsgemäßen Verfahren sieht vor, das beladene Sorbens zu regenerieren und wiederzuverwenden. Die Desorption wird vorzugsweise bei einer Temperatur zwischen 35 und 200 °C, insbesondere 60 bis 180 °C durchgeführt. Dabei erweist es sich gegenüber reiner Aktivkohle als Vorteil, daß das im erfindungsgemäßen Verfahren verwendete Sorbens schwerer entflammbar ist. Die Regeneration kann durch bloßes Erhitzen, ohne Anwendung von Heißdampf, der eine energieaufwendige Trocknung notwendig macht, erfolgen. Sofern gewünscht, kann man aber natürlich auch mit Heißdampf regenerieren. Neben diesen Vorteilen weist das im erfindungsgemäßen Verfahren zu verwendende Sorbens noch den Vorteil auf, daß die katalytische Zersetzung der sorbierten organischen Verbindungen bei der Regeneration erheblich geringer ist als bei der Verwendung von reiner Aktivkohle oder Zeolithen als Sorbens. Oft ist eine katalytische Zersetzung gar nicht nachweisbar. Das erfindungsgemäße Verfahren arbeitet darüber hinaus mit hoher Selektivität.

Mit dem erfindungsgemäßen Verfahren können aus Gasen oder Flüssigkeiten, insbesondere wäßrigen Lösungen, jene Stoffe entfernt werden, die bekanntermaßen mittels Aktivkohle sorbiert werden können. Gegebenenfalls kann durch einfaches Kontaktieren eines Gases oder einer Flüssigkeit und anschließender Analyse festgestellt werden, ob eine bestimmte organische Substanz sorbiert werden kann. Es können polare und unpolare, gasförmige, dampfförmige, flüssige oder in Flüssigkeiten, insbesondere in Form wäßriger Lösungen vorliegende organische Substanzen entfernt werden. Insbesondere kann man Gase und Dämpfe organischer Verbindungen entfernen, die als Lösemittel brauchbar sind. Beispielsweise kann man Substanzen sorbieren, die nur aus Kohlenstoff und Wasserstoff aufgebaut sind, beispielsweise aliphatische oder zykloaliphatische Kohlenwasserstoffe, beispielsweise Benzin, oder aromatische Kohlenwasserstoffe wie Benzol, Toluol oder Xylol. Man kann auch Verbindungsklassen sorbieren, die Kohlenstoff sowie Heteroatome wie Stickstoff, Sauerstoff, Halogenatome, Schwefel, Phosphor sowie gegebenenfalls Wasserstoff enthalten. So können Halogenkohlenstoffe, Halogenkohlenwasserstoffe, beispielsweise Chlorkohlenstoffe, Chlorkohlenwasserstoffe, Chlorfluorkohlenstoffe, Chlorfluorkohlenwasserstoffe, Fluorkohlenstoffe, Fluorkohlenwasserstoffe, Alkohole, Ketone, Carbonsäureester, Aldehyde, aliphatische, zykloaliphatische oder aromatische Ether, Alkylphosphorverbindungen, Alkylschwefelverbindungen entfernt werden. Aus dem vorstehenden ergibt sich, daß anzunehmen ist, daß jede beliebige organische Substanz sorbiert werden kann, vorausgesetzt, sie liegt gasförmig, dampfförmig oder flüssig, gegebenenfalls in Form einer Lösung, vor.

Dabei ist es empfehlenswert, daß man nicht unter Bedingungen arbeitet, die zur Zerstörung des Trägers führen. Dies gilt insbesondere, wenn man mit wäßrigen Lösungen kontaktiert. Die Bedingungen, die zur Beschädigung des oxidischen Trägers führen, sind dem Fachmann bekannt. So sollte bei Verwendung von $SiO_2$ als oxidischem Träger der pH-Wert einer zu behandelnden wäßrigen Lösung nicht im zu stark alkalischen Bereich liegen, vorzugsweise nicht oberhalb von pH 10. Bei Verwendung von Aluminiumoxid sollte der pH-Wert einer zu behandelnden wäßrigen Lösung nicht im zu stark sauren Bereich liegen, vorzugsweise nicht unterhalb von pH 5.

Insbesondere aromatische Kohlenwasserstoffe wie Benzol, Toluol oder Xylol werden mit hoher Selektivität auch aus Wasser enthaltenden Gasen sorbiert.

Beispielsweise kann man Abgase aus Produktionsprozessen behandeln, in welchen solche organischen Verbindungen hergestellt oder als Ausgangsverbindungen oder Lösungsmittel verwendet werden, z.B. auch Abluft aus Lakkiereiereien, Druckereien oder andere industrielle Abgase.

Ein weiterer Gegenstand der vorliegenden Erfindung ist das im erfindungsgemäßen Verfahren einsetzbare Sorbens. Das erfindungsgemäße Sorbens umfaßt partikelförmige Aktivkohle einer Partikelgröße von 50 bis 10.000 nm in einer Menge von 5 bis 40 Gew.-% und gegebenenfalls kristalline Materialien in einem perlförmigen oxidischen Träger auf Basis von amorphen $SiO_2$, $Al_2O_3$ oder Alumosilikat, wobei der Träger in einem Fällöl geformt worden ist. Die bevorzugten Ausführungsformen des erfindungsgemäßen Sorbens entsprechen denjenigen, wie sie in bevorzugten Ausführungsformen des Anwendungsverfahrens zu verwenden sind.

Ein besonders bevorzugtes Sorbens ist perlförmig mit einem Durchmesser von 0,5 bis 10 mm und umfaßt Aktivkohle einer Partikelgröße von 50 bis 10.000 nm in einer Menge von 5 bis 40 Gew.-%, bezogen auf das Gesamtgewicht des Sorbens, in einem amorphen oxidischen Träger auf Basis von $SiO_2$, der gegebenenfalls noch kristalline Anteile wie Zeolithe oder Aluminiumphosphat in einer Menge von 0,5 bis 50 Gew.-%, bezogen auf das Gesamtgewicht des Sorbens, enthalten kann. Die Porengröße des besonders bevorzugten Sorbens liegt im Bereich zwischen 1 bis 10.000 Å, vorzugsweise 5 bis 10.000 Å.

Im Folgenden werden Verfahren zur Herstellung des erfindungsgemäßen Sorbens angegeben. Die Herstellung oxidischer Materialien auf Basis von amorphem $SiO_2$, $Al_2O_3$ oder Alumosilikat ist dem Fachmann bekannt.

Die Herstellung amorpher Alumosilikate kann analog dem in der DE-OS 29 17 313 beschriebenen Verfahren erfolgen. Dabei werden eine Aluminat- und eine Silikat-Lösung vereinigt. Wenn das Gemisch sofort in ein Fällöl gegeben wird, bilden sich perlförmige Körper aus amorphem Alumosilikat. Zur Herstellung des erfindungsgemäßen Sorbens setzt man einer oder beiden Ausgangslösungen Aktivkohle zu.

Eine weitere Möglichkeit zur Herstellung der erfindungsgemäßen Sorbenzien besteht darin, eine (saure) Aluminiumsulfat-Lösung und eine Silikat-Lösung miteinander zu vereinigen und dabei in amorphes Alumosilikat zu überführen. Auch hier wird einer oder beiden Lösungen Aktivkohle zugesetzt. Bei sofortiger Eingabe der miteinander vermischten Lösungen in ein Fällöl erhält man wiederum perlförmige Körper.

Ein erfindungsgemäßes Sorbens auf Basis von amorphem $SiO_2$ wird erhalten, wenn man Aktivkohle in Silikat-Lösung einmischt und mit Säurelösung vereinigt. Alternativ könnte man auch der Säurelösung Aktivkohle beimischen. Bei Eintropfen in ein Fällöl erhält man wiederum perlförmige Körper. Zusätzlich zur Aktivkohle kann man auch kristalline Komponenten wie z.B. Zeolithe beimischen.

Alternativ kann man amorphe oxidische Materialien mit Aktivkohle, z.B. durch Besprühen mit einer Aktivkohle-Suspension in Wasser, beschichten. Selbstverständlich kann man auch erfindungsgemäße Sorbenzien auf diese Weise nachbehandeln.

Im Anschluß an das erfindungsgemäße Herstellverfahren kann man übliche weitere Schritte durchführen wie Altern, Basenaustausch, Waschen, Entionisieren, Trocknen bzw. Tempern.

Besonders vorteilhafte Sorbenzien werden erhalten, wenn man das gefällte oxidische Material nach dem Altern, vor dem Basenaustausch trocknet.

Die folgenden Beispiele sollen das erfindungsgemäße Verfahren weiter erläutern ohne es in seinem Umfang ein-

3

zuschränken.

**Beispiele 1 bis 11:**

Herstellung von Aktivkohle und gegebenenfalls kristallines weitporiges $SiO_2$ enthaltenden Sorbenzien auf Basis von amorphen $SiO_2$

Allgemeine Herstellvorschrift:

Als Quelle für das amorphe $SiO_2$ wurde eine Natriumsilikat-Lösung mit 6,30 Gew.-% $Na_2O$ und 21,16 Gew.-% $SiO_2$ und einer Dichte von $d_{20}$= 1,256 eingesetzt. Aktivkohle oder Graphit sowie gegebenenfalls weitporiges $SiO_2$ (feinteilige Partikel, Porendurchmesser 20 bis 30 Å) wurden der Natriumsilikat-Lösung in Form einer wäßrigen Suspension (Maische) beigemischt. Die Fällung erfolgte durch Vermischen mit einer sauren Lösung, die eine wäßrige Schwefelsäure mit einer Konzentration von 7,87 Gew.-% $H_2SO_4$ und einer Dichte von $d_{20}$= 1,049 war. Beim Vermischen der alkalischen und der sauren Lösung stellte sich ein pH-Wert von 6,9 ein. Das Gemisch wurde sofort in ein Fällöl eingegeben und die entstandenen Perlen, gegebenenfalls nach Altern, bis zur Sulfatfreiheit gewaschen. Dann erfolgte ein Basenaustausch, indem man die Perlen 5 mal je 3 Stunden lang mit 0,5 Gew.-% $H_2SO_4$ enthaltender Schwefelsäure kontaktierte. Es wurde dann 3,5 Stunden lang bei 180 °C mit Dampf in einem Umlufttrockner getrocknet. Anschließend wurde getempert. In Beispiel 5 wurde nach dem Altern getrocknet und die getrockneten perlförmigen Körper einem Basenaustausch unterworfen, indem sie fünfmal 3 Stunden lang mit Schwefelsäure eine Konzentration von 0,5 Gew.-% $H_2SO_4$ kontaktiert wurden und dann bis zur Sulfatfreiheit gewaschen wurden. In Beispiel 1 wurde statt Schwefelsäure 0,5 Gew.-% $Al_2(SO_4)_3$-Lösung verwendet.

**Beispiel 12:**

Verwendet wurde perlförmiges amorphes $SiO_2$ in Form des Handelsproduktes "AF25[R]" der Firma Solvay Catalysts GmbH. Es handelt sich um Perlen mit einem Durchmesser von 2 bis 6 mm. Diese Perlen wurden mit wäßriger Graphit-Suspension besprüht und dann 18 Stunden bei 200 °C getrocknet.

Die Verfahrensparameter und Eigenschaften der erhaltenen Sorbenzien sind in der folgenden Tabelle 1 zusammengefaßt.

Tabelle 1

| Bei-spiel | Eingesetzte Maische | Gehalt der Maische [Gew.-%] | mittlere Teilchen-größe [Mikron] (8) | Volumenver-hältnis Maische: Wasserglas | Alterung [h] | Tempern h; °C | Rüttel-gewicht [g/ml] | Poren-volumen [ml/g] | Oberfläche [m²/g] | Berst-druck [kg] | Gehalt an Aktivkohle bzw.Graphit [Gew.-%] |
|---|---|---|---|---|---|---|---|---|---|---|---|
| 1 | Aktiv-kohle (1) | 13,8 | 4,7 | 0,438 | 2 | 18/200 | | 0,91 | 817 | 2,7 | 20 |
| 2 | Graphit SiO₂ weit-porig | 21,4 21,4 | 8,6 4,2 | 0,375 | 2 | 18/200 | 0,53 | 0,63 | 680 | | 3 |
| 3 | Graphit SiO₂ weit-porig | 21,4 21,4 | 8,6 1,8 | 0,375 | 2 | 18/200 | 0,59 | | | | 11,3 |
| 4 | Aktiv-kohle (2) | 16,1 | 4,8 | 0,411 | 18 | 18/200 | 0,40 | 1,01 | 675 | 1,4 | 6,4 |
| 5 | Aktiv-kohle (2) | 21,4 | 5,2 | 0,411 | 18 | 4/180+ 18/200 | 0,41 | 1,07 | 285 | 7,2 | 6,4 |
| 6 | Aktiv-kohle (3) | 15,3 | 2,8 | 0,395 | 4 | 6/200 | | 0,79 | 758 | 3,7 | 20 |
| 7 | Aktiv-kohle (3) | 13,0 | 2,8 | 0,464 | 4 | 6/200 | 0,49 | 0,73 | 739 | 2,9 | 20 |
| 8 | Aktiv- (4) kohle (11) | 15,5 | 2,6 | 0,390 | 4 | 6/200 | 0,43 | 0,90 | 745 | 0,9 | 20 |
| 9 | Aktiv- (5) kohle (12) | 10,8 | 2,8 | 0,562 | 4 | 6/200 | 0,48 | 0,76 | 719 | 3,2 | 20 |
| 10 | Aktiv-kohle (6) | 14,3 | 0,9 | 0,423 | 4 | 6/200 | | 0,95 | 592 | | 20 |
| 11 | Aktiv- (7) kohle (13) | 12,1 | 1,4 | 0,500 | 4 | 6/200 | 0,52 | 0,68 | 722 | 6,9 | 20 |
| 12 | Graphit | 21,4 | 8,6 | (9) | --- | 18/200 | 0,48 | | | | 8,0 |
| 13 | Graphit | 21,4 | 8,6 | (10) | -- | 18/200 | 0,47 | | | | 4,2 |

Erläuterungen zu Tabelle 1:

(1) Produkt Lurgi AS 4/420$^R$          (8) d$_{50}$, bestimmt nach
(2) A-Kohle Riedel 18003 $^R$               der Cilas Methode
(3) Norit P1$^R$, American Norit Co.     (9) Fertige SiO$_2$-Perlen besprüht
(4) Lurgi Carbopol SC 44/1$^R$
(5) Lurgi Gn-A$^R$                      (11) Schüttgewicht: 0,40 g/ml
(6) Degussa Flammruß$^R$                (12) Schüttgewicht: 0,45 g/ml
(7) Norit SA 1$^R$                      (13) Schüttgewicht: 0,48 g/ml

**Beispiele 14 bis 17:**

Verwendung von Sorbenzien zur Toluol-Adsorption

Allgemeine Vorschrift:

Vor der Anwendung wurden die einzusetzenden Sorbenzien 16 Stunden lang bei 160 °C aktiviert. Als Testgas wurde Stickstoff mit einer Beladung von 1000 ppm Toluol und 3000 ppm H$_2$O eingesetzt. Die Raumgeschwindigkeit betrug 1.200 l/Stunde und l Sorbens, die Kontaktzeit betrug 3 Sekunden.

Die Gleichgewichtsbeladung, angegeben in Gew.-%, wurde aus den Verläufen der Durchbruchskurven durch Integration ermittelt. Die Toluol-Selektivität ist definiert als

$$TS[\%]= \frac{\text{Toluol-Beladung [Gew.-\%]}}{\text{Gesamtbeladung [Gew.-\%]}}$$

Die charakteristischen Daten der Versuche sind in Tabelle 2 zusammengestellt.

Tabelle 2

| Aktivkohleperlen | | | | | | |
|---|---|---|---|---|---|---|
| Perlen aus Beispiel | Zusammensetzung (Gew.-%) | BET-Oberfläche (m$^2$/g) | Gleichgewichtsbeladung (Gew.-%) | | | Toluol Selektivität % |
| | | | Gesamt | Toluol | H$_2$O | |
| 5 | 6,4 % A-Kohle, Rest SiO$_2$ | 285 | 6,14 | 5,07 | 1,07 | 82,5 |
| 6 | 20 % -"- | 758 | 14,2 | 11,5 | 2,7 | 80 |
| 11 | 20 % -"- | 722 | 16,33 | 14,2 | 2,1 | 86,9 |

Aus der Tabelle 2 ergibt sich, daß die Toluol-Selektivität der erfindungsgemäßen Sorbenzien sehr hoch ist.
Nach einer thermischen Regenerierung bei 180 °C wurden die Perlen mit gutem Erfolg erneut zur selektiven Toluol-Sorption eingesetzt.

**Patentansprüche**

1. Verfahren zur Sorption von organischen Verbindungen aus Flüssigkeiten oder Gasen unter Verwendung von Aktivkohle in einem oxidischen Träger, dadurch gekennzeichnet, daß man ein Sorbens verwendet, umfassend 5 bis 40 Gew.-% partikelförmige Altivkohle einer Partikelgröße von 50 bis 10.000 nm in einem oxidischen Träger auf Basis von amorphem SiO$_2$, Al$_2$O$_3$ oder Alumosilikat, wobei der Träger in einem Fällöl geformt worden ist.

**2.** Verfahren nach Anspruch 1, dadurch gekennzeichnet, daß die partikelförmige Aktivkohle gleichförmig verteilt im Sorbens vorliegt.

**3.** Verfahren nach einem der vorhergerienden Ansprüche, dadurch gekennzeichnet, daß das Sorbens zusätzlich partikelförmigen Zeolith enthält.

**4.** Verfahren nach einem der vorhergehenden Ansprüche, dadurch gekennzeichnet, daß man das beladene Sorbens bei einer Temperatur von 35 bis 200 °C regeneriert und wiederverwendet.

**5.** Sorbens zur Anwendung im Verfahren nach einem der Ansprüche 1 bis 4, umfassend partikelförmige Aktivkohle einer Partikelgröße von 50 bis 10.000 nm in einer Menge von 5 bis 40 Gew.-% und gegebenenfalls kristalline Materialien in einem perlförmigen oxidischen Träger auf Basis von amorphem $SiO_2$, $Al_2O_3$ oder Alumosilikat, wobei der Träger in einem Fällöl geformt worden ist.

**Claims**

**1.** A method for the sorption of organic compounds from liquids or gases using activated carbon in an oxidic support, characterised in that a sorbent is used comprising 5 to 40 % by weight of particulate activated carbon of a particle size of 50 to 10,000 nm in an oxidic support based on amorphous $SiO_2$, $Al_2O_3$ or alumosilicate, wherein the support has been formed in a precipitation oil.

**2.** A method according to Claim 1, characterised in that the particulate activated carbon is present uniformly distributed in the sorbent.

**3.** A method according to any one of the preceding Claims, characterised in that the sorbent additionally contains particulate zeolite.

**4.** A method according to any one of the preceding Claims, characterised in that the loaded sorbent is regenerated at a temperature of 35 to 200°C and reused.

**5.** A sorbent for use in the method according to any one of Claims 1 to 4, comprising particulate activated carbon of a particle size of 50 to 10,000 nm in a quantity of 5 to 40 % by weight and, optionally, crystalline materials in a bead-like oxidic support based on amorphous $SiO_2$, $Al_2O_3$ or alumosilicate, wherein the support has been formed in a precipitation oil.

**Revendications**

**1.** Procède de sorption de composés organiques à partir de liquides ou de gaz en utilisant du charbon actif dans un support oxydant, caractérisé en ce qu'on utilise un sorbant comprenant de 5 à 40 % en poids de charbon actif sous forme de particules d'une granulométrie de 50 à 10000 nm dans un support oxydant à base de $SiO_2$, $Al_2O_3$ ou d'aluminosilicate amorphes, le support ayant été formé dans une huile de précipitation.

**2.** Procédé selon la revendication 1, caractérisé en ce que le charbon actif sous forme de particules se trouve réparti de manière uniforme dans le sorbant.

**3.** Procédé selon l'une quelconque des revendications précédentes, caractérisé en ce que le sorbant contient en plus de la zéolithe sous forme de particules.

**4.** Procédé selon l'une quelconque des revendications précédentes, caractérisé en ce qu'on régénère le sorbant chargé à une température de 35 à 200°C, et on le réutilise.

**5.** Sorbant destiné à être utilisé dans le procédé selon l'une des revendications 1 à 4, comprenant du charbon actif sous forme de particules d'une granulométrie de 50 à 10000 nm et en une quantité de 5 à 40 % en poids et le cas échéant des matériaux cristallins dans un support oxydant sous forme de perles à base de $SiO_2$, $Al_2O_3$ ou d'aluminosilicate amorphes, le support ayant été formé dans une huile de précipitation.